# EUROPEAN PATENT APPLICATION

(11) **EP 1 117 021 A2**
(43) Date of publication of application: **18.07.2001**
(21) Application number: 01300317.3
(22) Date of filing: 15.01.2001
(51) Int. Cl.: G05B 19/42

(54) **Manufacturing replicas**

(30) Priority: 14.01.2000 GB 0000787
(71) Applicant: Gravutex Eschmann International Limited, Glossop, Derbyshire SK13 9LQ (GB)
(72) Inventor: Brooke, Nigel, Oldham, Lancashire, OL3 5DE (GB); Miller, Michael Stuart, Buxton, Derbyshire SK17 9AG (GB)
(74) Representative: Lambert, Ian Robert

(57) **Abstract**

There is disclosed a method for replicating surface features comprising the steps of:
obtaining a profile of the surface features using a non-contact surface measurement technique;
describing the surface features by constructing a mathematical database which represents the profile obtained by the non-contact surface measurement technique; and
using the mathematical database to produce a replica of the surface features.

## Description

This invention relates to methods for manufacturing replicas, in particular in the replication of surface features such as textures.

Many moulded articles are made with a textured surface finish. Examples include interior trim parts of automobiles, knobs and handles for cooking utensils, garden furniture, casings for audio and video equipment, computers and calculators, and so on. Many of these items are made from large, expensive moulds.

In many cases, it is desirable to produce textured moulded articles which replicate the texture of an "original" sample on the surface of the moulded article. An example would be the replication of a leather surface to produce moulded articles, such as automobile dashboards, which have a leather-like feel and appearance. Traditionally, this has been achieved by hand and eye in a method in which the dips and valleys of the textured substrate (for example, a leather) are filled with chalk. This step provides contrast between the chalk filled dips and valleys, and the darker uppermost ridges of the substrate. The chalk filled substrate is then photographed, and the resulting photograph is used by skilled personel to construct a suitable template. The template is used to etch the pattern into a mould tool.

There are several disadvantages associated with this method. Firstly, it is labour intensive, requiring a great deal of effort by skilled operatives. Secondly, the process of producing a textured mould can take months. This is because the analysis of the surface texture and preparation of master films which reproduce the texture takes time, and because the etching based on these masters is a process of trial and error. Generally many attempts are required before a suitable mould, having appropriate etching depths - both relative and absolute - is produced. Therefore, the process is extremely time consuming. Thirdly, the process is neither accurate nor reproducible. This is due to a number of factors, principally due to the exercise of human judgement in the construction of the template. Variations in the amount of chalk used to provide the contrast can also lead to variations in eventual texture of the mould tools, because the valleys, depressions, dips and like features of the texture will be filled to a greater or lesser extent. Also note that the technique is inherently incapable of providing fine detail, such as the depths and shapes of valleys and like features. In other words, spatial resolution is inherently low. Since a certain amount of the detail is lost, the form of the etched texture is different to the original texture. For example, with leather textures, hair cell follicles and fine crease lines in the skin are obliterated by the chalk infill.

The present invention provides an improved method for replicating textured surfaces which is of high spatial resolution, and capable of replicating, to a high standard, fine detail such as the depths and shapes of valleys and like features. Furthermore, the method of the present invention can be performed on a rapid timescale. Furtherstill, the present invention is easier to use than prior art techniques, and personel do not require such a high level of skill and training. Additionally, and highly advantageously, the method is conveniently computerised.

Although the foregoing discussion is in respect of the replication of textures, it is understood that the invention is not limited in this regard: rather, the invention can be used to replicate a wide variety of surface features. The invention can be used to produce "positive image" and "negative image" replicas. In a "positive" replica, surface features such as ridges are identically reproduced as ridges, and surfaces features such as valleys are identically reproduced as valleys. In a "negative" replica, such surface features are inverted: ridges become valleys, and valleys become ridges. Negative replicas can be used as mould tools (i.e., negative textures) to produce positive mouldings, i.e. further, positive, replicas of the original surface feature having positive textures like the original sample. It is understood that the manufacture of positive and negative image replicas are within the scope of the invention.

According to the invention there is provided a method for replicating surface features comprising the steps of:
obtaining a profile of the surface features using a non-contact surface measurement technique;
describing the surface features by constructing a mathematical database which represents the profile obtained by the non-contact surface measurement technique; and
using the mathematical database to produce a replica of the surface.

In this way, the aforesaid advantages are achieved. The non-contact surface measurement technique may be laser surface profiling. It is possible to achieve measurement accuracies of ± 1 µm using this technique.

The mathematical database may be used to produce the replica by: constructing a plurality of laminae, each lamina corresponding to a slice through the profile; and producing a plurality of layers corresponding to the laminae.

In this way, the surface features can be "built up", layer by layer, using methods which are described in more detail below. Alternative reconstruction methodologies might be employed instead. For example, it may be possible to use the mathematical database to control direct removal of material from a substrate, for example by cutting or laser ablation.

The plurality of laminae may be constructed using computer software. This provides numerous advantages. The profile data produced by the measurement technique are easily transferred to a computer or microprocessor for manipulation in order to construct the laminae. The computer or microprocessor can also be used to control the measurement technique. The necessary manipulation of the data can be performed quite easily by relatively unskilled operatives, or even performed automatically in software. A considerable advantage is that the laminae comprise digital data which can be used to produce the templates. For example, the data can be easily converted into CAD or CAM format for subsequent use.

The layers may be templates, and the replica may be produced by etching a substrate in a series of area selective etching steps using the templates. Chemical etching is conveniently employed, although other forms of removal might be employed, such as ion or plasma etching. The templates may comprise prints having material removed from selected areas thereof in order to produce a pattern corresponding to a lamina.

Alternatively, the replica may be produced by stacking the layers together so as to build up a replica of the surface features. Such an approach might be adopted in order to produce textured skin of the sort disclosed in International Publication WO 99/28113, the contents of which are herein incorporated by reference.

The laminae approach may additionally comprise the steps of:
using the mathematical database to construct a surface pattern comprising fine topographical details which are not contained in the plurality of laminae; and
producing a layer corresponding to the surface pattern.

In this way, fine details, such as hair cell follicles and fine crease lines in leather textures, can be replicated successfully.

The method may further comprise the steps of using the replica of the surface features to produce further replicas of the surface features.

The replica of the surface features may be a mould tool or a precursor to a mould tool, and the further replicas may be produced by a moulding process using the mould tool.

The replica of the surface features producing by the etching may be a roller.

The surface features may comprise a texture.

The texture may be a leather texture.

The texture may be a wood grain texture.

The texture may be a cloth texture.

The texture may be a random or geometric pattern, picture or design.

The method may be used for manufacturing components for the automobile industry, such as dashboards, interior trim and fascia.

Methods in accordance with the invention will now be described with reference to the accompanying drawings, in which:-
- Figure 1: is a schematic flow-chart of the replication process;
- Figure 2: shows (a) a surface feature, (b) templates corresponding to the surface feature and (c) a substrate etched using the templates; and
- Figure 3: shows the construction of laminae through a surface structure, and templates corresponding to the laminae.

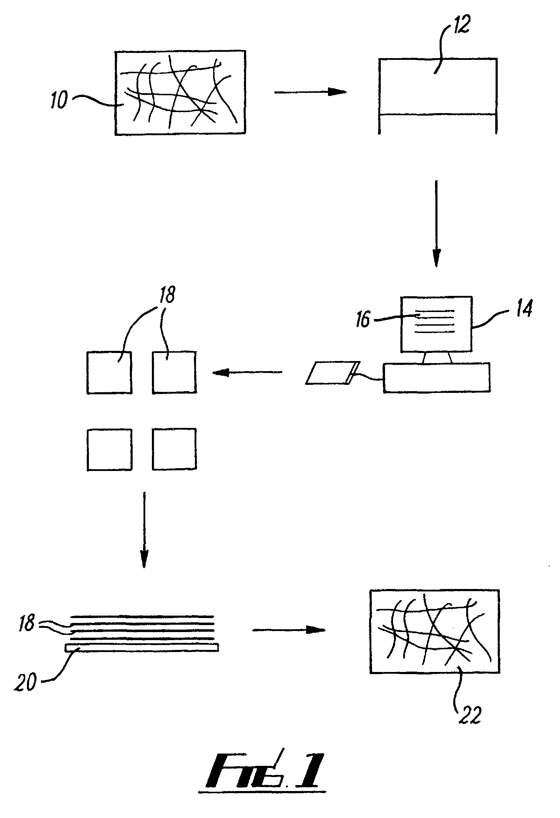

Figure 1 is a schematic flow chart of an embodiment of the method of the present invention. A sample 10 having the surface features which it is desired to replicate is provided. The sample 10 is profiled by way of a scanning laser surface measurement device 12. The information obtained thereby is digitised and processed using a computer 14. The information comprises a mathematical database representing the profile, which can be stored on computer. Appropriate data selection and conditioning is performed in order to construct a plurality of laminae (shown schematically at 16), each lamina corresponding to a slice through the profile.

A plurality of templates 18 are produced corresponding to the laminae 16. The templates 18 are successively assembled on a steel substrate 20, and a series of area selective etching steps are performed using the templates, which act as masks. In the way, a mould tool 22 having a "negative image" of the original surface feature is produced. The mould tool 22 can then be used to produce large numbers of "positive" replicas of the original surface features.

Scanning laser surface measurement devices are produced by a number specialist supplies, such as Uniscan Instruments Limited, Sigma House, Burlow Road, Buxton, Derbyshire, United Kingdom. This company manufactures a commercially available "scanner", the OSP A4 optical profile, which is suitable for some applications. However, it has been found to be advantageous to optimise the resolution of the instrument by increasing the number of data points sampled and by using a sensor which provides a smaller laser spot than the standard sensor provided commercially. Additionally, for some surface features, such as leather grain, it has been found that it is desirable to scan over a larger area than is possible with the OSP A4 machine. An adapted version, having a scanning area of 500mmx500mm, has been produced for use with such materials. It may be possible to use other sources of electromagnetic radiation, or other means altogether, such as electron beams, in order to perform the non-contact surface measurements.

It should be noted that none of the contact probe measuring devices commonly used for engineering purposes are suitable, since they do not scan over a sufficiently large surface area or possess the necessary resolution to provide the surface detail required for the profiling of, for example, leather textures.

It should also be noted that whilst scanning laser surface measurement devices are known, the intended purpose is usually to analyse the overall topographical detail of a surface in order to inspect for any lack of surface uniformity, fractures or other imperfections, rather than to break down and separate out surface features in a lamina analysis.

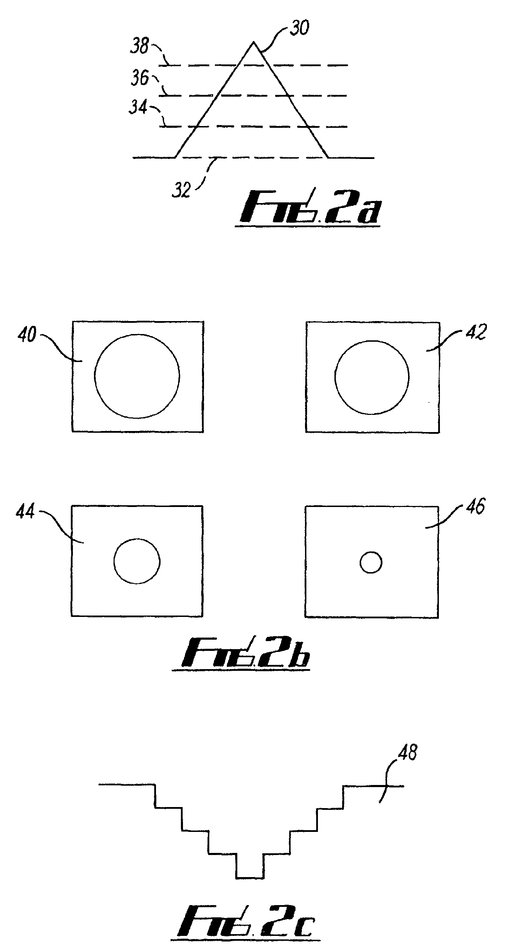

Figure 2a demonstrates how laminae can be obtained in a simple example in which the surface feature 30 is a cone (which appears, in cross section, as a V shaped raised wedge). Four laminae are constructed, corresponding to four slices through the feature along planes which extend perpendicularly to the plane of the paper and which contain the lines 32, 34, 36, 38. The corresponding templates 40, 42, 44, 46 are shown in Figure 2b. Figure 2c shows a "negative image" replica 48 which can be obtained by etching using the templates 40, 42, 44, 46. The replica 48 might be the steel surface of an injection moulding tool. The etching process would involve a first etching step using template 40, a second etching step using template 42, a third etching step using template 44, and a fourth etching step using template 46. The templates 40, 42, 44, 46 must be positioned in register.

In this way, the topography of the original surface can be mapped and substantially reproduced. In practise, of course, the situation is considerably more complicated than the simple example depicted in Figure 2. A leather texture, for example, possesses a complicated pattern of"hills" and "valleys". Further complications arise due to small creases and holes (corresponding to hair follicles) which are associated with leather sample. It is desirable to separate out features such as small creases and holes from the gross topographical features which are intended to reproduced. It is highly advantageous in this regard that the data are digitised and may be manipulated using software. As previously discussed, unwanted "high and lows" in the gross topography can be filtered out in order to isolate the fine detail which can be regarded as running over the surface of the gross topography. This fine detail can be incorporated into the replica by providing an "extra" template which corresponds to the surface pattern. Therefore, the "extra" template imposes the fine details upon the gross topographical features provided by the other templates.

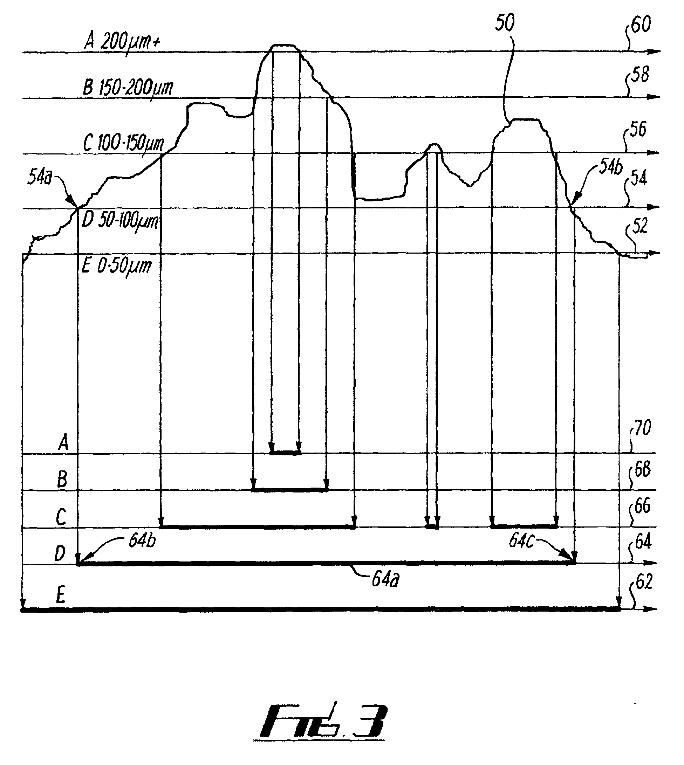

Figure 3 depicts the construction of laminae from a more complicated surface structure 50. Laminae 52, 54, 56, 58, 60 are taken from slices through the structure 50 at a variety of "heights" from a defined reference level, which might be the level of the surface in the absence of any texture. Templates for etching 62, 64, 66, 68, 70 are produced having gaps which correspond to the width of the surface structure(s) in the corresponding laminae. For example, template 64 corresponds to lamina 54. Template 64 has a gap 64a therethrough which extends from point 64b to point 64c. The gap 64a corresponds to the distance between point 54a and point 54b, this distance being the width of the surface at the height of lamina 54. It will be appreciated that Figure 3 depicts only a cross section through a complete three dimensional structure, but that the principles outlined above could be extended to the production of full templates.

The template 52 would be the first film used in a "broad sweep" etch in which all but the regions corresponding to the lowest troughs of the surface structure would be exposed to the etch. The template 68 would be the final template used: the etch performed using template 68 produces the deepest parts of the replica surface. It will be apparent that the replica produced by this process is a negative replica, in which the peaks of the original surface structure 50 comprise the troughs of the replica. Such a replica might be used as a mould tool.

It is possible to provide a further film corresponding to the fine details of the surface. In this instance, the further film conveying the fine surface detail would be the final template used.

It will be apparent to the skilled reader that other methodologies might be employed in order to construct the laminae. For example, the average positions between successive measurement slices must be used as laminae. Therefore, the above described methodology should be considered as non-limiting.

The overall depth of the surface features associated with many textures, including leather, is in the approximate range 100-300 µm. However, this should be considered to be non-limiting. Currently, the factor limiting the faithfulness of the reproduction is probably the etching step, which is difficult to control to depths below 10 µm. However, since the accuracy of the measurement process can be performed at a spatial resolution of ca. 1µm, the present invention can accommodate improvements in the faithfulness of replication should further advances be made in the etching art.

Suitable templates manufacturing methodologies are known to those skilled in the art. For example, the digitised laminae data can be used to produce master films which in turn are used to produce "sticky" prints which are overlaid on a substrate to before etching. Typically, etch depths in the range 10 to 50 µm are produced in each etching step in order to reproduce a texture. Usually, between 3 and 10 templates are used; most typically between 4 and 6 templates are employed. However, this is non-limiting: the etch depths and number of templates used can be varied in order to suit the specific task in hand. Suitable etching methods are well known in the art.

The invention is not limited to the use of etching in order to reproduce surface features. For example, it may be possible to selectively remove material by selective cutting or ablation, such as laser ablation. A computer controlled mechanism might be employed for this purpose. The textured surface thus produced could be used for subsequent moulding processes such as roller manufacture. Instead of removing material to reproduce the surface texture, it is possible to "build up" a replica of the surface texture, for example by building up layers of a photopolymer, such as a UV curable polymer.

International Publication WO 99/28113 discloses the production of moulded articles having texture in a process in which a surface texture is applied to a smooth moulded article. The present invention can be integrated with the method of WO 99/28113. The surface texture which is applied to the moulded article can be a replica of a "true" surface texture which is replicated using the method of the present invention. For example, the surface texture can be produced by stacking layers together on a carrier film. Etching or direct removal of material are other possible replication methodologies. In addition to the texturing of smooth or partially textured moulds, it is also possible to apply textures to prototypes and other non-moulded articles using the principles outlined herein and in WO 99/28113. The surface texture can be applied to a pattern master, such as mandril, master pattern or casting former and a mould tool can be produced by casting the textured pattern master (with surface texture thereon). Alternatively, it may be possible to build up a negative image of the desired surface features on a smooth "tool A surface". In this way, a positive image of the surface feature can be imparted to subsequent mouldings, i.e., many replicas of the original can be produced.

Examples of textures which can be replicated using the invention are leather, wood grain, cloth, random or geometrical patterns, a picture or a design. Moulds or precursors of moulds (for example, a surface which is itself moulded or coated to produce the mould) can be produced, and used to make many further replicas. Alternatively, rollers can be produced, the rollers being used to emboss a substrate. Stamps might also be produced. It is conceivable that other forms of surface feature might be replicated using the present invention. For example, micromachining of sub-millimetre sized tools, gears and other structures might be possible.

## Claims

1. A method for replicating surface features comprising the steps of:
obtaining a profile of the surface features using a non-contact surface measurement technique;
describing the surface features by constructing a mathematical database which represents the profile obtained by the non-contact surface measurement technique; and
using the mathematical database to produce a replica of the surface features.

2. A method according to claim 1 in which the non-contact surface measurement technique is laser surface profiling.

3. A method according to claims 1 or claim 2 in which the mathematical database is used to produce the replica by:
constructing a plurality of laminae, each lamina corresponding to a slice through the profile; and
producing a plurality of layers corresponding to the laminae.

4. A method according to claim 3 in which the plurality of laminae are constructed using digital data.

5. A method according to claim 3 or claim 4 in which the layers are templates, and the replica is produced by etching a substrate in a series of area selective etching steps using the templates.

6. A method according to claim 5 in which the templates comprise prints having material removed from selected areas thereof in order to produce a pattern corresponding to a lamina.

7. A method according to claim 3 or claim 4 in which the replica is produced by stacking the layers together so as the build up a replica of the surface features.

8. A method according to any of claims 3 to 7 additionally comprising the steps of:
using the mathematical database to construct a surface pattern comprising fine topographical details which are not contained in the plurality of laminae; and
producing a layer corresponding to the surface pattern.

9. A method according to any of claims 1 to 8 further comprising the steps of using the replica of the surface features to produce further replicas of the surface features.

10. A method according to claim 9 in which the replica of the surface features is a mould tool or a precursor to a mould tool, and the further replicas are produced by a moulding process using the mould tool.

11. A method according to claim 9 in which the replica of the surface feature produced by the etching is a roller.

12. A method according to any previous claims in which the surface features comprise a texture.

13. A method according to claim 12 in which the texture is a leather texture.

14. A method according to claim 12 in which the texture is a wood grain texture.

15. A method according to claim 12 in which the texture is a cloth texture.

16. A method according to claim 12 in which the texture is a random or geometric pattern, picture or design.

17. A method according to any previous claim for manufacturing components for the automobile industry.
